# EUROPÄISCHE PATENTSCHRIFT

(11) **EP 2 445 746 B1**
(45) Veröffentlichungstag und Bekanntmachung des Hinweises auf die Patenterteilung: **17.12.2014**
(21) Anmeldenummer: 10726019.2
(22) Anmeldetag: 26.05.2010
(51) Int. Cl.: B60L 11/18

(54) **SICHERUNG DER ABRECHNUNG VON ÜBER EINE LADESTATION BEZOGENER ENERGIE**
SECURING THE BILLING OF ENERGY DRAWN AT A CHARGING STATION
SÉCURISATION DE FACTURATION DE LA CONSOMMATION D'ÉNERGIE DANS UNE STATION DE CHARGE

(30) Priorität: 22.06.2009 DE 102009030091; 03.05.2010 DE 102010019244
(43) Veröffentlichungstag der Anmeldung: 02.05.2012
(73) Patentinhaber: RWE AG, 45128 Essen (DE)
(72) Erfinder: GAUL, Armin, 59379 Selm (DE); VOIT, Stephan, 45133 Essen (DE); WISY, Martin, 24576 Bad Bramstedt (DE)
(74) Vertreter: Walter, Philipe
(86) Internationale Anmeldenummer: PCT/EP2010/057199
(87) Internationale Veröffentlichungsnummer: WO 2010/149449

(56) Entgegenhaltungen:
- EP-A1- 1 995 109
- EP-A2- 1 971 074
- WO-A1-2009/039406
- WO-A1-2010/009502
- US-A1- 2002 132 144
- US-A1- 2007 192 599
- US-A1- 2008 162 936

## Beschreibung

Der Gegenstand betrifft ein Verfahren zur Kommunikation zwischen einer Ladestation und einem Fahrzeug sowie eine Vorrichtung als auch ein System zur Kommunikation zwischen einer Ladestation und einem Fahrzeug. Der Gegenstand betrifft auch ein Verfahren und eine Vorrichtung zur Sicherung der Abrechnung einer von einer Ladestation bezogenen Energiemenge.

Die Verbreitung elektrisch betriebener Fahrzeuge wird vermutlich in naher Zukunft rapide zunehmen. Mit der Verbreitung von Elektrofahrzeugen, die mit einem Elektromotor betrieben werden, sollte jedoch sichergestellt werden, dass diese in einfachster Weise mit Energie versorgt werden können. Hierzu sollte eine funktionierende Infrastruktur zur Verfügung gestellt werden.

Insbesondere sollte die Möglichkeit gegeben werden, in öffentlichen Bereichen Energie für Elektrofahrzeuge zu beziehen. Bei den bisher verfügbaren Reichweiten von Elektrofahrzeugen zwischen 50 und einigen 100 km ist es angebracht, dass auch außerhalb des häuslichen Umfeldes ein Laden der Fahrzeuge möglich ist. Hierfür sollten in öffentlichen Bereichen Ladestationen zur Verfügung gestellt werden, um eine stete Verfügbarkeit von Energie für Elektrofahrzeuge durch ein Versorgungsnetz zur Verfügung zu stellen. Diese Verfügbarkeit von elektrischer Energie bzw. von Ladestationen ist ein entscheidendes Kriterium für die Akzeptanz von Elektrofahrzeugen.

Bei in öffentlichen Bereichen installierten Ladestationen muss jedoch sichergestellt werden, dass der Kunde die bezogene Energie bezahlt. Auch sollte sichergestellt werden, dass der Kunde vor dem Beziehen elektrischer Energie Kenntnis über die zu erwartenden Kosten hat. Entsprechend des herkömmlichen Tankvorgangs sollte der Kunde unmittelbar vor dem Aufladen der Batterie wissen, welche Kosten ihn erwarten. So sollte dem Kunden beispielsweise der Preis für eine Kilowattstunde bekannt sein. Darüber hinaus sollte sichergestellt sein, dass der Kunde auch tatsächlich nur die Energiemenge in Rechnung gestellt bekommt, die er auch bezogen hat.

Hierbei ist besonders auf die Integrität, Authentizität und Überprüfbarkeit der sowohl zwischen Fahrzeug und Ladestation als auch zwischen Ladestation und Abrechnungszentrale übertragenen Abrechungsdaten zu achten. Zum Einen ist es notwendig, dass die Daten über die Lademenge und/oder den Nutzer unverfälscht bleiben. Zum Anderen ist für Abrechnungszwecke eine Übertragung von Messdaten (Abrechnungsdaten) von der Ladestation an ein Abrechnungssystem vor Manipulationen zu sichern. Der Nutzer muss sicherstellen und überprüfen können, dass ihm nur die von ihm bezogene Energie in Rechnung gestellt wird.

Die US 2002 132 144 A1 beschreibt ein Verfahren zum Handeln von mittels Brennstoffzellen in Fahrzeugen erzeugtem Strom. Hierbei wird die erzeugte Strommenge mittels Zählern im Fahrzeug, einer Docking Station sowie einer Zentrale erfasst. Zur Überprüfung der gemessenen Strommengen erfolgt ein Abgleich der Messwerte der drei Zähler.

Die EP 1 995 109 A1 zeigt ein System zum Auslesen von Transpondern.

Die WO 2010 009502 A1 zeigt ein Verfahren zum Identifizieren von Elektrofahrzeugen gegenüber einer Ladestation.

Die WO 2009 039406 A1 zeigt ein Verfahren zum Wiederaufladen einer Batterie eines Elektrofahrzeugs.

Im genannten Stand der Technik ist jedoch nicht das Problem erkannt worden, dass es für einen Nutzer technisch möglich sein muss, die in seinen Abrechnungsdaten angegebenen Messdaten überprüfen zu können. Diese Überprüfung muss mit technisch einfachen Mitteln möglich und zugleich eichtechnisch einwandfrei sein.

Aus diesem Grunde lag dem Gegenstand die Aufgabe zugrunde, ein Verfahren sowie eine Vorrichtung zur Verfügung zu stellen, welche eine gesicherte, technisch überprüfbare Abrechnung von über eine Ladestation bezogener Energie gewährleisten.

Diese Aufgabe wird gegenständlich durch ein Verfahren nach Anspruch 1 sowie eine Vorrichtung nach Anspruch 12 gelöst.

Beim Ladevorgang bezieht das Elektrofahrzeug elektrische Energie von der Ladestation. In der Ladestation wird diese elektrische Energie mit Hilfe eines Messgerätes (Zählers) gemessen. Während des Ladevorgangs als auch beim Abschluss des Ladevorgangs ist es notwendig, dass die bezogene Energiemenge für Abrechungszwecke erfasst wird und der Benutzer des Fahrzeugs Kenntnisse über die bezogene Energiemenge erhält.

Um es dem Fahrzeug bzw. dem Nutzer des Fahrzeugs zu ermöglichen, zumindest die Abrechungsdaten und/oder die bezogene Energiemenge zu bestätigen und zu überprüfen, wird das elektronische Signieren und Übermitteln des Datenpakets von der Ladestation an das Fahrzeug und/oder die Abrechnungszentrale vorgeschlagen.

Im Nachfolgenden werden die Begriffe "Signatur", "signieren" etc im Sinne einer elektronischen, datentechnischen Signatur verwendet. Auch kann durch das elektronische Signieren des Datenpakets sichergestellt werden, dass dieses nicht mehr nachträglich manipuliert wird.

Die Ladestation erfasst neben der Energiemenge zumindest auch eine Identifikation des Messgeräts. Dies kann eine Gerätenummer sein. Die Identifikation des Messgeräts kann auch die zusätzliche Identifikation der Ladestation sein. Mit Hilfe zumindest dieser Werte wird ein Datenpaket erstellt. Das Datenpaket kann neben dem Zählerstand (Messgerätezählerstand) auch noch einen Zählerstatus (Messgerätestatus), eine Zähleridentifikation (Messgeräteidentifikation), eine Ladestationsidentifikation, eine Zeitinformation, eine Datumsinformation und/oder einen öffentlichen Messgeräteschlüssel sowie gegebenenfalls weitere Informationen aufweisen.

Ein Datenpaket wird in der Ladestation elektronisch signiert. Dies ermöglicht es, die Authentizität und Integrität des Datenpakets zu überprüfen. Das elektronisch signierte Datenpaket wird gegenständlich an das Elektrofahrzeug und/oder die Abrechnungszentrale übermittelt.

Mit Hilfe eines eindeutigen, aus dem Datenpaket und einem dem Messgerät (Zähler) oder der Ladestation zugeordneten Schlüssels erstellten, vorzugsweise binären Wertes, kann eine Signatur errechnet wird. Aus dem Datenpaket kann ein Referenzwert, beispielsweise ein Hash-Code, errechnet werden. Dieser Referenzwert kann auch zur Berechnung der Signatur verwendet werden. Diese Signatur kann beispielsweise mit Hilfe des Hash-Codes und eines dem Messgerät (Zähler) oder der Ladestation zugeordneten Schlüssels errechnet werden. Auch kann eine Signatur unmittelbar aus dem Datenpaket und dem dem Messgerät (Zähler) oder der Ladestation zugeordneten Schlüssel errechnet werden.

Signieren kann ein Erstellen eines Kryptogrammes als Signatur mit Hilfe eines vorzugsweise binären Schlüssels sein, wobei mit Hilfe des Schlüssels und des zu signierenden Datenpaketes bzw. des hieraus erstellen Referenzwertes ein vorzugsweise binäres Kryptogramm erstellt wird. Mittels eines solchen Kryptogrammes ist eine Überprüfung möglich, ob das Datenpaket tatsächlich von der Ladestation erstellt wurde.

Beispielsweise bei einem Ladevorgang ist es möglich, dass der Nutzer zu Beginn eines Ladevorgangs die Messgeräteidentifikation, die beispielsweise außen am Gehäuse der Ladestation angeordnet ist, notiert und zusätzlich die Uhrzeit des Beginns des Ladevorgangs notiert. Zum Ende der Ladevorgang kann der Nutzer erneut die Urzeit notieren.

Wenn diese Zeitinformationen zusammen mit dem Messgerätezählerstand Teil des jeweiligen Datenpakets werden, so kann eine Signatur dieses Datenpakets durch den Nutzer überprüft werden, wenn der Nutzer zusätzlich den öffentlichen Messgeräteschlüssel kennt.

Zum Beispiel ist es möglich, dass der Nutzer zu Beginn und zum Ende eines jeden Ladevorgangs die Messgeräteidentifikation und die jeweilige Uhrzeit notiert.

Die Ladestation erstellt ein Datenpaket, welches beispielsweise die Uhrzeit als auch die Messgeräteidentifikation enthält. Zusätzlich kann das Datenpaket den Messgerätzählerstand und den Messgerätestatus enthalten. Darüber hinaus kann beispielsweise eine Vertrags- oder Kundenidentifikation in dem Datenpaket enthalten sein.

Der Messgerätestatus kann eine Information über die technische Funktionalität der Ladestation enthalten, z.B. ein binärer Wert, der angibt, ob die Ladestation fehlerfrei arbeitet.

Mit Hilfe des privaten Messgeräteschlüssels kann eine Signatur aus diesem Datenpaket erstellt werden. Die Signatur zusammen mit dem Datenpaket kann von der Ladestation an die Abrechnungsstation übermittelt werden.

Durch die Signatur des Datenpakets ist sichergestellt, dass der in dem Datenpaket enthaltene Messwert und die Zeitinformation untrennbar miteinander verbunden sind. Wird einer der beiden Werte verändert, so ergäbe sich eine andere Signatur. Da der Nutzer die Zeitinformation selber erfassen kann, kann er auch eine Manipulation des Messwertes feststellen.

Zum Ende eines Abrechnungszeitraums erhält der Nutzer vom Stromnetzbetreiber/Energielieferanten eine Rechnung über die von ihm bezogene Energiemenge. In dieser Rechnung kann beispielsweise jeder Ladevorgang aufgeschlüsselt nach Start und Ende des Ladevorgangs aufgelistet sein.

Zusätzlich kann jeder Rechnungsposition die Messgeräteidentifikation, beispielsweise eine Ladepunkt-ID, als auch eine Zählernummer zugeordnet sein. Zusätzlich können die Start- und Endzählerstände sowie die Start- und Endzeiten (Zeit, Datum) jeder Rechnungsposition zugeordnet sein. Mit diesen Informationen kann dem Kunden in der Rechnung die bezogene Energiemenge für jeden Ladevorgang mitgeteilt werden.

Darüber hinaus kann der Kunde zusammen mit der Rechnung zu jeder Rechnungsposition eine Information über den Messgerätestatus als auch die Signatur, die für das entsprechende Datenpaket erstellt wurde, erhalten. Für jede Rechnungsposition können z.B. zwei Signaturen erstellt werden. Eine erste Signatur für das Datenpaket, das zu Beginn des Ladevorgangs erstellt wurde und eine zweite Signatur für das Datenpaket, das zum Ende des Ladevorgangs erstellt wurde.

Abschließend kann der Nutzer den öffentlichen Messgeräteschlüssel mitgeteilt bekommen.

Da der Kunde selbstständig sowohl die Messgeräteidentifikation als auch die Uhrzeit des jeweiligen Ladevorgangs notiert hat, kann er zusammen mit den zusätzlichen Informationen aus der Rechnung, beispielsweise Ladepunktidentifikation, Zählernummer, Zählerstand und dem öffentlichen Schlüssel, die ihm mitgeteilte Signatur für jedes Datenpaket einzeln überprüfen. Hierzu kann er beispielsweise mittels der ihm mitgeteilten Signatur und des Mittels ihm mitgeteilten öffentlichen Schlüssels den Referenzwert errechnen. Ein Vergleichsreferenzwert kann der Kunde beispielsweise mittels der von ihm notierten Information und der zusätzlichen Information aus der Rechnung errechnen und überprüfen, ob die Daten identisch sind. Somit hat der Kunde die Möglichkeit, die Richtigkeit der Rechnungspositionen zu überprüfen.

Es kann beispielsweise mit einem empfängerseitig bekannten, zu dem Signaturschlüssel passenden Schlüssel der Referenzwert oder das zu signierende Datenpaket aus der Signatur zurück errechnet werden. Dazu kann beispielsweise empfängerseitig ein Vergleichs-Referenzwert ausgehend von dem Datenpaket errechnet werden. Stimmen errechneter Referenzwert und Vergleichs-Referenzwert überein, kann von einer Datenintegrität ausgegangen werden.

Beispielsweise kann aus Nutzdaten (Datenpaket) ein Referenzwert berechnet werden. Aus diesem Referenzwert kann mit einem privaten Schlüssel eine Signatur errechnet werden. Die Signatur kann zusammen mit den Nutzdaten in einem Datencontainer, als zwei getrennte Dateien oder eingebettet in die Nutzdaten, an einen Empfänger verschickt werden. Der Empfänger kann mit einem zum privaten Schlüssel passendem öffentlichen Schlüssel aus der Signatur den Referenzwert errechnen. Aus den ebenfalls empfangenen Nutzdaten kann empfängerseitig ebenfalls ein Vergleichs-Referenzwert berechnet werden. Stimmen Referenzwert und Vergleichs-Referenzwert überein, kann die Integrität, Authentifizierung, Authentizität der Nutzdaten sichergestellt werden.

Vorteilhafterweise wird dem Kunden zusammen mit der Rechnung für jedes Datenpaket eine gesonderte Signatur mitgeteilt. Für jede Rechnungsposition, die sich aus zwei Messungen zusammensetzt, nämlich dem Beginn und dem Ende eines Ladevorgangs stehen zwei Datensätze zur Verfügung, beziehungsweise stehen bei einem Tarifwechsel (mit drei oder vier Messungen) drei oder vier Datensätze zur Verfügung, nämlich Start und Ende des Ladevorgangs sowie ein weitere Datensatz für den Tarifwechsel oder zwei Datensätze, einer für das Ende des ersten Tarifs und einer für das Ende des zweiten Tarif, bzw. den jeweiligen Zeitpunkten innerhalb eines Tarifs, denen jeweils eine Signatur zugeordnet ist. Der erste Datensatz bestimmt den Beginn des Ladevorgangs und enthält zusätzlich beispielsweise Messgeräteidentifikationen (Ladepunkt-ID, Zählernummer), den Zählerstand und das Statuswort. Für das Ende des Ladevorgangs existiert ein zweiter Datensatz, der den Zeitpunkt des Endes des Ladevorgangs enthält. Das gleiche gilt für die Datensätze bei einem Tarifwechsel, denen auch eine Zeitinformation, eine Messgeräteidentifikation und ein Zählerstand zugeordnet sind.

Für jeden Datensatz wird in der Ladestation eine Signatur errechnet, welche dem Nutzer im Klartext zur Verfügung gestellt wird. Die Richtigkeit der Signatur kann der Nutzer dadurch überprüfen, dass er mit Hilfe der von ihm notierten Zähleridentifikation und Zeitinformation zusammen mit den ihm mitgeteilten Informationen über Zählerstand und Statuswort als auch dem öffentlichen Schlüssel eine Vergleichssignatur errechnen kann und überprüfen kann, ob die mitgeteilte Signatur und die errechnete Vergleichssignatur identisch sind. Die grundsätzliche Verwendbarkeit eines Datensatzes ergibt sich für den Kunden daraus, dass er die Identifikationsnummer des Ladepunktes (Zählers) sowie Zeitinformationen (Datum und/oder Uhrzeit) mit seinen Aufzeichnungen vergleicht.

Dadurch, dass die mitgeteilte Signatur ein-eindeutig dem Datenpaket zugeordnet werden kann, könnte der Nutzer eine Manipulation des Wertes des Messgerätezählerstands feststellen. Dann wäre nämlich die ihm mitgeteilte Signatur nicht mehr identisch mit der von ihm berechneten Signatur. Ein veränderter Zählerstand würde mit identischen Informationen über Zeitpunkt der Ladung und/oder Messgeräteidentifikation zu einer anderen Signatur führen. Der Kunde notiert aber vorzugsweise den Zeitpunkt des Ladevorgangs als auch die Messgeräteidentifikation selber, so dass er eine Manipulation im Bereich des Messgerätezählerstands erkennen kann.

Unter einer elektronischen Signatur können auch mit elektronischen Informationen verknüpfte Daten, mit denen man den Unterzeichner bzw. Signaturersteller identifizieren und die Integrität der signierten elektronischen Informationen prüfen kann, verstanden werden. In der Regel handelt es sich bei den elektronischen Informationen um elektronische Dokumente. Die elektronische Signatur erfüllt somit technisch gesehen den gleichen Zweck wie eine eigenhändige Unterschrift auf Papierdokumenten. Eine elektronische Signatur kann unter anderem auch eine digitale Signatur umfassen. Die digitale Signatur kann die rein datentechnische, kryptographische Signatur bezeichnen, bei der kryptographische, mathematische Methoden angewandt werden. "Elektronische Signaturen" können Daten in elektronischer Form, die anderen elektronischen Daten beigefügt oder logisch mit ihnen verknüpft sind und die der Authentifizierung dienen, sein.

Ändern sich bei der Übertragung Werte innerhalb des Datenpakets, so kann empfängerseitig, bspw. im Fahrzeug oder der Abrechnungszentrale, festgestellt werden, dass die mit dem Datenpaket übertragene Signatur nicht zu dem empfangenen Datenpaket passt und eine Veränderung des Datenpakets stattgefunden haben muss. Der Vergleich der empfangenen Signatur mit einer errechneten Vergleichs-Signatur oder der Vergleich eines Referenzwertes mit einem Vergleichs-Referenzwertes ergibt bei veränderten Daten einen Unterschied zwischen diesen beiden Werten.

Gemäß einem vorteilhaften Ausführungsbeispiel wird vorgeschlagen, dass das Datenpaket und die jeweilige Signatur zumindest zum Beginn und zum Ende eines Ladevorgangs erstellt und an die Abrechnungsstation übermittelt wird. In der Abrechnungsstation kann somit aus den beiden Datenpaketen eine Rechnungsposition erstellt werden, in dem die Veränderung des Messgerätezählerstands ausgewertet wird und anhand dieser Veränderung eine Energiemenge berechnet wird. Zusammen mit Tarifinformationen kann mit der errechneten Energiemenge ein Rechnungsbetrag bestimmt werden. Dadurch, dass für jedes Datenpaket eine Signatur erstellt wurde und der Nutzer zum Beginn und zum Ende eines jedes Ladevorgangs selbsttätig Zeitinformationen notiert hat, die Teile des Datenpakets und somit relevant für die Signatur sind, kann der Kunde anhand der Signatur überprüfen, ob die der Rechnung zugrundeliegenden Informationen korrekt sind oder nicht.

Auch wird vorgeschlagen, dass das Datenpaket und die jeweilige Signatur zu einem Zeitpunkt eines Tarifwechsels erstellt wird, wobei zu einem Zeitpunkt eines Tarifwechsels ein erstes Datenpaket und die jeweilige Signatur für ein Ende eines ersten Tarifs erstellt wird und ein zweites Datenpaket und die jeweilige Signatur für einen Beginn eines zweiten Tarifs, oder nur ein Datenpaket den Tarifwechsel repräsentierend, erstellt wird. Somit wird sichergestellt, dass bei einem Tarifwechsel die jeweils zu einem bestimmten Tarif bezogene Energiemenge festgestellt werden kann. Wechselt ein Tarif während eines Ladevorgangs, so wird der Zählerstand des Messgerätes im Moment des Tarifwechsels erfasst. Mit Hilfe dieses Zählerstandes und der Zeitinformation unmittelbar vor dem Tarifwechsel wird ein erstes Datenpaket erstellt und zusammen mit der Zeitinformation unmittelbar nach einem Tarifwechsel ein zweites Datenpaket. Jedes der Datenpakete wird signiert und an die Abrechnungsstation übermittelt, so dass eine Überprüfung möglich ist. Alternativ kann auch ein Datenpaket für den Wechselzeitpunkt erstellt werden.

Gemäß einem vorteilhaften Ausführungsbeispiel wird vorgeschlagen, dass die Ladestation und/oder die Abrechnungsstation aus dem Messgerätezählerstand zum Beginn eines Ladevorgangs und dem Messgerätezählerstand zum Ende eines Ladevorgangs oder bei einem Tarifwechsel eine bezogene Energiemenge berechnet. Mit Hilfe des Unterschieds zwischen den jeweiligen Messgerätezählerständen kann eine Energiemenge berechnet werden, die für die Erstellung einer Rechnungsposition verwendet werden kann.

Wie bereits zuvor erläutert, können von der Abrechnungsstation Abrechnungsdaten zu der bezogenen Energiemenge bereitgestellt werden. Diese Abrechnungsdaten können im Rahmen einer Rechnung dem Nutzer mitgeteilt werden. Die Rechnung kann aus mehreren Elementen gebildet sein. So kann beispielsweise eine erste Seite einer Rechnung die Summe der einzelnen Rechnungspositionen pro Tarif auflisten. Eine zweite Seite einer Rechnung kann für jede Rechnungsposition einen Start- und Endzeitpunkt ausgeben. Zusätzlich hierzu können Informationen zu Messgeräteidentifikationen, beispielsweise eine Ladepunkt-ID, als auch eine Zählernummer ausgegeben werden. Auch kann die Adresse der jeweiligen Ladestation ausgegeben werden. Zusätzlich kann für jeden Zeitpunkt ein Zählerstand ausgegeben werden und zusammen mit einem Tarif auf der Rechnung angegeben werden. Schließlich kann für jeden Ladevorgang die bezogene Energiemenge ausgegeben werden.

Auf einer weiteren Seite kann eine Rechnung für jede Rechnungsposition Zeitinformationen ausgeben. Außerdem kann die Zählernummer oder eine sonstige Messgeräteidentifikation zusammen mit dem Zählerstand und/oder einem Messgerätestatus ausgegeben werden. Diese Daten können beispielsweise Bestandteil des Datenpakets gewesen sein. In der gleichen Zeile kann dann eine Signatur ausgegeben werden, die sich aus den angegebenen Daten und dem Messgeräteschlüssel ergeben hat.

Abschließend kann auf einer weiteren Seite der Rechnung für jedes Messgerät ein öffentlicher Schlüssel angegeben werden.

Der öffentliche Schlüssel kann zusammen mit den Informationen, die für jedes Datenpaket dem Benutzer mitgeteilt worden sind, überprüft werden, ob die Signatur korrekt ist. Da der Nutzer sowohl den Zeitpunkt als auch die Zählernummer notiert hat, kann er mit den von ihm selbst notierten Informationen die Signatur auf Authentizität und Integrität überprüfen.

Auch ist es möglich, dass die oben genannten Informationen abrufbar, insbesondere über ein Weitverkehrsnetz, insbesondere über das Internet bereitgehalten werden.

Gemäß einem vorteilhaften Ausführungsbeispiel wird vorgeschlagen, dass die Abrechnungsdaten zugriffsgeschützt bereitgehalten werden. Insbesondere die rechnungsbezogenen und kundenbezogenen Daten können zugriffsgeschützt bereitgehalten werden, beispielsweise passwortgeschützt zusammen mit einer Kunden- oder Vertragsidentifikation. Somit wird sichergestellt, dass nur Berechtigte Zugriff auf Rechnungsinformationen haben. Der Zugriff auf die öffentlichen Schlüssel der jeweiligen Messgeräte kann jedoch so geschützt sein, dass alle Kunden eines Energieversorgers hierauf einen gemeinsamen Zugriff haben. Alternativ kann hier sogar gänzlich auf einen Zugriffsschutz verzichtet werden.

Um sicherzustellen, dass seitens des Energieanbieters keine Manipulation der Rechnungsdaten erfolgen kann, was beispielsweise dadurch möglich wäre, dass der öffentliche Schlüssel manipuliert wird, wird vorgeschlagen, dass die öffentlichen Messgeräteschlüssel von Messgeräten der Ladestationen durch einen von der Abrechnungsstation logisch und/oder räumlich getrennten Computer bereitgehalten werden. Insbesondere können die öffentlichen Schlüssel bei einer Eichsstelle oder Prüfstelle vorgehalten werden, so dass eine Manipulation durch den Energieanbieter unmöglich wird.

Um den Kunden die Überprüfung der Rechnungsdaten zu erleichtern, wird vorgeschlagen, dass ein Computerprogramm zur Errechnung und/oder Überprüfen der Signatur für den jeweils zugeordneten Messgerätezählerstand bereitgestellt wird. Dieses Programm kann beispielsweise aus den Online verfügbaren Rechnungsdaten oder auch aus den von Kunden eingegebenen Rechnungsdaten die Signatur errechnen. Der Kunde kann beispielsweise den von ihm notierten Zeitpunkt sowie die von ihm notierte Zählernummer von Hand eingeben. Zusammen mit diesen Informationen kann das Programm aus den Rechnungsinformationen, beispielsweise dem Zählerstand und dem Statuswort, unter Verwendung des öffentlichen Schlüssels die Signatur errechnen. Diese Signatur kann dann durch das Programm automatisch mit der Signatur verglichen werden, die in den Rechnungsdaten enthalten war. Der Kunde kann diese Überprüfung jedoch auch selbst durchführen, da die von dem Programm errechnete Vergleichssignatur im Klartext ausgegeben wird und die den Rechnungsdaten zugrunde liegende Signatur ebenfalls im Klartext ausgegeben wurde. Dieses Programm kann von einem Computer zur Verfügung gestellt werden, der logisch und/oder räumlich von der Abrechnungsstation getrennt ist. Insbesondere kann eine Eichstelle neben den öffentlichen Schlüsseln dieses Programm zur Verfügung stellen.

Gemäß einem Ausführungsbeispiel kann im Messgerät oder der Ladestation ein Paar aus öffentlichem Messgeräteschlüssel (PuM) und privatem Messgeräteschlüssel (PiM) gespeichert sein. Mit Hilfe des privaten Messgeräteschlüssels (PiM) kann eine erste Signatur (SD) des Datenpaketes erstellt werden. Hierzu kann beispielsweise aus einem dem Datenpaket zugeordneten Referenzwert mit Hilfe des privaten Messgeräteschlüssels (PiM) ein Kryptogramm errechnet werden. Dieser Referenzwert kann ein Hash-Code sein.

Empfängerseitig, z.B. in einer Abrechnungszentrale oder durch den Nutzer kann die Authentizität und Datenintegrität des empfangenen Datenpaketes dadurch überprüft werden, dass das empfangene Kryptogramm mit Hilfe des empfängerseitig bekannten öffentlichen Messgeräteschlüssels entschlüsselt wird und der Referenzwert somit berechnet wird. Ein Vergleich mit einem empfängerseitig aus dem Datenpaket errechneten Referenzwert ermöglicht die Überprüfung der Datenintegrität.

Dadurch, dass mit einem eindeutig einem Benutzer, einem Fahrzeug oder einem Vertrag zugeordneten öffentlichen Schlüssel das Kryptogramm entschlüsselt werden kann und bei einer entsprechenden Zertifizierung des zueinander gehörigen Schlüsselpaares kann auch die Authentizität der Signatur überprüft werden. Die Signatur kann aus einem Referenzwert oder unmittelbar aus dem Datenpaket errechnet werden.

Das Datenpaket zusammen mit der ersten Signatur (SD) kann an das Fahrzeug übermittelt werden.

Beispielsweise ist es möglich, dass der öffentliche Messegeräteschlüssel (PuM) in einer Abrechnungszentrale bekannt ist. Auch kann der öffentliche Messgeräteschlüssel (PuM) in dem Datenpaket enthalten sein.

Auch kann der öffentliche Messgeräteschlüssel zusammen mit der ersten Signatur (SD) an das Fahrzeug übermittelt werden. Auch kann der öffentliche Schlüssel (PuM) zusammen mit einem im Folgenden näher erläuterten qualifizierten Datenpaket an eine Abrechnungszentrale übermittelt werden.

Es wird auch vorgeschlagen, dass das Datenpaket und die erste Signatur (SD) im Fahrzeug empfangen wird.

Gemäß eines vorteilhaften Ausführungsbeispiels wird vorgeschlagen, dass im Fahrzeug ein Hash-Code (H) des Datensatzes aus Datenpaket und erster Signatur (SD) erstellt wird.

Ein Hash-Code kann mittels eines eindeutigen Rechenverfahrens als ein statistisch eindeutiger Referenzwert errechnet werden. Ein Hash-Code kann ein aus einer endlichen Vielzahl von Werten ermittelter Wert sein. Aufgrund der Vielzahl der möglichen Hash-Codes kommt es bei einer Veränderung des Datensatzes zu einem geänderten Hash-Code. Dass zwei unterschiedliche Datensätze einen gleichen Hash-Code erzeugen ist, abhängig von der Anzahl und Art der Koeffizienten zur Berechnung des Hash-Codes, äußerst unwahrscheinlich. Für die diese Wahrscheinlichkeit ist das Verfahren zur Berechnung des Hash-Wertes wesentlich. Beispiele für Hash-Code Berechnungsmethoden können MD2, MD4, MD5, SHA, RIPEMD-160, Tiger, HAVAL, Whirlpool, LM-Hash oder NTLM. Andere Verfahren, insbesondere kryptographische Verfahren sind ebenso geeignet. Eine kryptologische Hashfunktion sollte zumindest eine Einwegfunktion sein. Sogenannte Einweg-Hashfunktionen (One-Way-Hash Functions, OWHFs) erfüllen die Bedingung, eine Einwegfunktion zu sein, d. h. zu einem gegebenen Ausgabewert h(x) = y ist es praktisch unmöglich, einen Eingabewert x zu finden (engl. preimage resistance). Außerdem ist eine Hashfunktion besser für die Kryptographie geeignet, wenn möglichst keine Kollisionen auftreten. Das heißt, dass für zwei verschiedene Werte x und x' der Hashwert (Hash-Code) möglichst auch verschieden sein sollte: h(x) ungleich h(x'). Ist dies immer der Fall, so kann von einer kollisionsresistenten Hashfunktion (Collision Resistant Hash Function, CRHF) gesprochen werden.

Gemäß einem Ausführungsbeispiel wird auch vorgeschlagen, dass der Hash-Code (H) mittels eines fahrzeugseitigen privaten Fahrzeugschlüssels (Pi2) signiert wird womit ein kryptographischer Hash-Code (H') entsteht. Die so gebildete zweite Signatur (SF1), welche dem kryptographischen Hash-Code (H') entspricht, ermöglicht die Integrität des Datensatzes aus Datenpaket und erster Signatur (SD) zu überprüfen. Auch kann mit dieser zweiten Signatur (SF1) die Authentizität der Signatur überprüft werden, wenn das entsprechende Schlüsselpaar, hier aus dem privaten und dem öffentlichen Fahrzeugschlüssel gebildet, zertifiziert wurde und empfängerseitig der öffentliche Schlüssel bekannt ist.

Es wird vorgeschlagen, dass fahrzeugseitig ein privater Fahrzeugschlüssel (Pi2) und ein öffentlicher Fahrzeugschlüssel (Pu2) gespeichert sind. Zusammen mit dem Datensatz aus Datenpaket, erster Signatur (SD) und zweiter Signatur (SF1) kann der fahrzeugseitige öffentliche Fahrzeugschlüssel (Pu2) an die Ladestation übermittelt und dort empfangen werden. Die Ladestation kann diesen empfangenen Datensatz, auch als qualifiziertes Datenpaket bezeichnet, an eine Abrechungszentrale übermitteln. Parallel dazu kann die Ladestation einen aus Datenpaket und erster Signatur (SD) gebildeten Datensatz an die Abrechnungszentrale übermitteln.

In der Abrechnungszentrale kann mit Hilfe des empfangenen Datenpakets der Hash-Code (H) errechnet werden. Mit Hilfe des öffentlichen Fahrzeugschlüssels (Pu2), der ggf. von der Ladestation bzw. dem Fahrzeug empfangen wurde oder bereits in der Abrechnungszentrale bekannt ist, kann aus der zweiten Signatur (SF1) bzw. dem kryptographischen Hash-Code (H') ebenfalls ein Hash-Code (H) errechnet werden. Die beiden errechneten Hash-Codes können in der Abrechnungszentrale miteinander verglichen werden. Bei einem positiven Vergleichsergebnis kann auf eine integere Datenübertragung vom Fahrzeug über die Ladestation an die Abrechnungszentrale geschlossen werden.

Mit Hilfe einer solchen zweiten Signatur ist es möglich, dass die Richtigkeit der Messwerte durch das Fahrzeug bestätigt wird. Zu Abrechnungszwecken ist dies vorteilhaft, da somit eine Zuordnung des Messwertes zum Einen zu einer bestimmten Ladestation und zum Anderen zu einem Fahrzeug bzw. einem Vertrag, wie nachfolgend noch beschrieben wird, möglich ist. Auch kann ein Nutzer sich sicher sein, dass die von ihm bestätigten Messdaten auch fehlerfrei in der Abrechnungszentrale empfangen wurden.

Mit Hilfe der ersten Signatur (SD) und dem in der Abrechnungszentrale empfangenen Datenpaket kann auch die Authentizität und Integrität des von der Ladestation erstellten Datenpaketes überprüft werden. In der Abrechnungszentrale oder für den Nutzer ist der öffentliche Messgeräteschlüssel (PuM) bekannt oder wurde von der Ladestation empfangen. Außerdem wurde in der Ladestation die erste Signatur empfangen.

Aus der ersten Signatur kann mit Hilfe des öffentlichen Messgeräteschlüssels (PuM) ein Referenzwert errechnet werden, der mit einem aus dem Datenpaket errechneten Vergleich-Referenzwert verglichen werden kann. Hierdurch kann überprüft werden, ob die in dem Datenpaket enthaltenen Messdaten auf der Kommunikationsstrecke von Ladestation zum Fahrzeug und zurück und anschließend zur Abrechnungszentrale manipuliert wurden.

Zu einem Zeitpunkt vor einem Ladevorgang, beispielsweise bei einem Vertragsabschluss mit einem Energieversorger, können in dem Fahrzeug ein öffentlicher Fahrzeugschlüssel (Pu2) und ein privater Fahrzeugschlüssel (Pi2) gespeichert werden. Mit Hilfe dieses ersten Tupels kann eine Zuordnung von vom Fahrzeug signierten Werten zu dem Fahrzeug als auch die Integrität und Authentizität der vom Fahrzeug in der Abrechnungszentrale empfangenen Daten gewährleistet werden.

Es kann jedoch erwünscht sein, dass gerade eine Zuordnung zwischen einem Datensatz und einem bestimmten Fahrzeug nicht möglich ist. Diese Zuordnung kann aber gerade dann der Fall sein, wenn der von der Ladestation empfangene Datensatz im Fahrzeug mit Hilfe des fahrzeugseitigen Fahrzeugschlüsselpaares (Pi2, Pu2) signiert wird, wie zuvor beschrieben wurde. Um diese Zuordnung zu vermeiden, ist es möglich, dass zum Zeitpunkt eines Vertragsabschlusses ein öffentlicher Vertragsschlüssel (Pu3) und ein privater Vertragsschlüssel (Pi3) erstellt werden. Zumindest der öffentliche Vertragsschlüssel (Pu3) kann in einer Abrechnungszentrale gespeichert werden.

Darüber hinaus kann von einem Fahrzeug für einen Ladevorgang ein Tupel aus privatem Temporärschlüssel (Pi4) und öffentlichen Temporärschlüssel (Pu4) gebildet werden. Dieses Tupel kann pro Ladevorgang oder in regelmäßigen Abständen oder in unregelmäßigen Abständen erstellt werden.

Vor einer Signatur eines Datenpaketes in dem Fahrzeug kann der private Vertragsschlüssel (Pi3) von dem Fahrzeug abgefragt werden. Dies kann beispielsweise durch Nutzereingabe erfolgen. Auch kann der private Vertragsschlüssel (Pi3) von einem Fahrzeugschlüssel elektrisch ausgelesen werden. Dies kann beispielsweise mittels eines Transponders erfolgen.

Mit Hilfe des privaten Vertragsschlüssels kann ein öffentlicher Temporärschlüssel signiert werden. Mit Hilfe eines privaten Temporärschlüssels kann der Datensatz und die erste Signatur signiert werden. In der Abrechnungszentrale kann mit einem bekannten öffentlichen Vertragsschlüssel der öffentliche Temporärschlüssel entschlüsselt werden. Mit diesem öffentlichen Temporärschlüssel kann die Signatur des Datensatzes mit der ersten Signatur entschlüsselt werden. Gemäß einem vorteilhaften Ausführungsbeispiel wird auch vorgeschlagen, dass eine Signatur mittels eines SHA-256 Verfahrens ermittelt wird. Hierbei kann beispielsweise eine Variante FIPS 180-2 verwendet werden.

Insbesondere wird vorgeschlagen, dass eine Signatur mit Hilfe eines Elliptic-Curve Kryptografieverfahrens ermittelt wird. Hierbei ist es beispielsweise möglich, dass ein ECC-Verfahren mit 192 Bit verwendet wird.

Gemäß einem vorteilhaften Ausführungsbeispiel wird auch vorgeschlagen, dass das Datenpaket mittels eines asymmetrischen Verfahrens signiert wird. Bei diesem Verfahren wird, wie bereits zuvor erläutert, ein privater Schlüssel für eine Signatur verwendet und ein öffentlicher Schlüssel, der empfängerseitig bekannt ist, für die Entschlüsselung der Signatur verwendet.

Um eine Zuordnung eines Messwertes zu einem Mess-Zeitpunkt zu ermöglichen, wird vorgeschlagen, dass das Datenpaket einen Zeit-Index enthält. Ein Zeit-Index kann beispielsweise ein Sekundenindex sein, der über die gesamte Lebensdauer des Ladegeräts im mathematischen Sinne streng monoton wachsend ist und eine natürliche Zahl darstellt. Mit Hilfe dieses Sekundenindexes ist es möglich, eine ein-eindeutige Zuordnung des Mess-Zeitpunktes zu einem Messwert vorzunehmen. Auch kann ein Betriebssekundenzähler verwendet werden, der eine monoton wachsende natürliche Zahl sein kann, deren Ziel die eindeutige Zuordnung des Zeitpunktes eines Ereignisses zu der als Bezugssystem angenommenen gesetzlichen Zeit ist.

Um das Fahrzeug ständig über momentane Messwerte zu informieren, so dass beispielsweise ein Nutzer über den Ladezustand und die bezogene Energie informiert ist, wird vorgeschlagen, dass zyklisch zumindest ein Messwert durch die Ladestation ermittelt wird und dass ein zumindest den Messwert enthaltenes Datenpaket zwischen Ladestation und Elektrofahrzeug ausgetauscht wird.

Auch kann die Ladestation das zu Beginn einer Messung erstellte und signierte Datenpaket und das zum Ende einer Messung erstellte Datenpaket an die Abrechungszentrale übermitteln um dort aus dem Delta der Messwerte die entnommene Energiemenge berechnen zu können.

Auch kann in der Ladestation zum Ende eines Ladevorgangs ein Delta aus den Messwerten errechnet werden, wobei dieses Delta zumindest Auskunft über die bezogene Energiemenge geben kann. Ein Datenpaket mit diesem Delta kann signiert an das Fahrzeug übermittelt werden und dort ebenfalls signiert werden, wie zuvor beschrieben. Das so signierte Datenpaket kann an die Abrechungszentrale übermittelt werden.

Ein weiterer Gegenstand ist ein Verfahren nach Anspruch 19 sowie ein Verfahren nach Anspruch 41.

In dem Fahrzeug ist es möglich, zu überprüfen, ob das empfangene Datenpaket unverfälscht ist. Hierfür wird die empfangene Signatur verwendet. Die Signatur kann mit Hilfe des von der Ladestation empfangenen öffentlichen Schlüssels überprüft werden. Der öffentliche Schlüssel kann zur Errechnung einer Vergleichs-Signatur in dem Fahrzeug verwendet werden. In dem Fahrzeug wird somit mit Hilfe des Datenpakets und des öffentlichen Schlüssels eine zweite Signatur (Vergleichs-Signatur) errechnet, welche mit der empfangenen Signatur des Datenpakets verglichen wird. Stimmen die Signaturen überein, wurde das Datenpaket unverändert empfangen. Anderenfalls ist von einer Veränderung des Datenpaketes auszugehen. Das Fahrzeug kann dann beispielsweise der Ladestation eine Fehlermeldung übermitteln. In diesem Fall kann das Datenpaket zusammen mit der Signatur erneut übermittelt werden. Auch kann nach einer bestimmten Anzahl an fehlerhaften Übertragungen der Ladevorgang abgebrochen werden. Abrechnungsrelevant kann dann das letzte unverfälscht vom Fahrzeug empfangene Datenpaket sein.

Gemäß einem weiteren Gegenstand wird eine Vorrichtung nach Anspruch 20 sowie eine Vorrichtung nach Anspruch 42 beansprucht.

Ein weiterer Gegenstand ist eine Vorrichtung nach Anspruch 21 sowie eine Vorrichtung nach Anspruch 43.

Ein weiterer Gegenstand ist ein System nach Anspruch 22 sowie ein System nach Anspruch 44.

Die Merkmale der Verfahren und Vorrichtungen sind frei miteinander kombinierbar. Insbesondere können Merkmale der abhängigen Ansprüche unter Umgehung der Merkmale der unabhängigen Ansprüche in Alleinstellung oder frei miteinander kombiniert eigenständig erfinderisch sein.

Die zuvor genannten Verfahren können auch als Computerprogramm oder als auf einem Speichermedium gespeichertes Computerprogramm realisiert werden. Hierbei kann fahrzeugseitig, ladestationsseitig und/oder abrechnungszentralenseitig ein Mikroprozessor zur Durchführung der jeweiligen Verfahrensschritte durch ein Computerprogramm geeignet programmiert sein.

Nachfolgend wird der Gegenstand anhand einer Ausführungsbeispiele zeigenden Zeichnung näher erläutert. In der Zeichnung zeigen:
- Fig. 1: einen schematischen Aufbau eines Systems zum Laden eines Elektrofahrzeugs;
- Fig. 2a-d: beispielhafte Datenpakete und Signaturen;
- Fig. 3: eine Ablaufdiagramm eines beispielhaften Verfahrens.

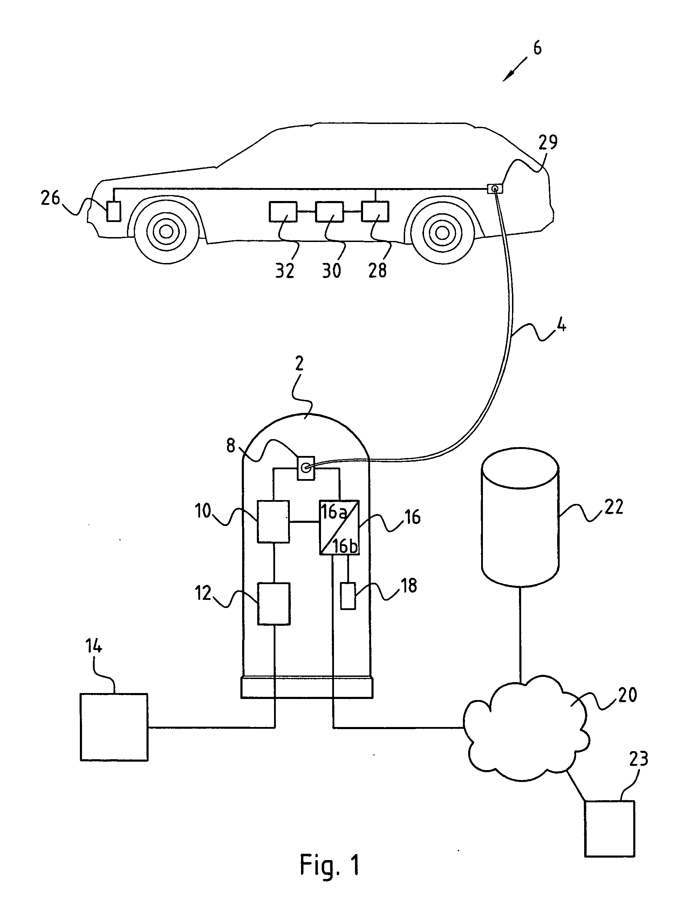

Fig. 1 zeigt eine Ladestation 2 welche über ein Verbindungskabel 4 mit einem Fahrzeug 6 elektrisch verbunden ist. In der Ladestation 2 ist eine Anschlussdose 8 zum Anschluss des Verbindungskabels 4 vorgesehen. Über das Verbindungskabel 4 werden zum Einen Energie übertragen und zum Anderen Daten zwischen Fahrzeug 6 und Ladestation 2 ausgetauscht.

Die Anschlussdose 8 ist elektrisch mit einem Messgerät 10 verbunden. Das Messgerät 10 misst die elektrische Leistung, die über die Anschlussdose 8 an das Fahrzeug 6 über das Verbindungskabel 4 abgegeben wird. Die elektrische Leistung wird über einen elektrischen Anschluss 12 von einem elektrischen Energieversorgungsnetz 14 bezogen.

Gekoppelt an das Messgerät 10 ist eine Recheneinheit 16 mit einer Kommunikationseinheit 16a und einer Signatureinheit 16b. Die Signatureinheit 16b kann eine dem Ladegerät 2 bzw. dem Messgerät 10 zugeordnete eindeutige Identifikation, beispielsweise eine privaten Messgeräteschlüssel (PiM) 18a erfassen. Auch kann ein öffentlicher Messgeräteschlüssel (PuM) 18b erfasst werden.

Die Recheneinheit 16 ist über ein Datennetz 20 mit einer Abrechnungszentrale 22 verbunden.

Ferner ist ein weiterer Computer 23 vorgesehen, der logisch und räumlich von der Abrechnungszentrale 22 getrennt ist. Insbesondere kann der Computer 23 mit dem Datennetz 20, z.B. einem Weitverkehrsnetz, z.B. dem Internet, verbunden sein. Der Computer 23 kann beispielsweise in den Räumen und/oder unter Aufsicht einer Eichbehörde betrieben werden.

Über das Datennetz 20 können Nutzer sowohl auf die Abrechnungszentrale 22 als auch den Computer 23 zugreifen. Bei der Abrechnungszentrale 22 können die Nutzer Rechnungsdaten abrufen. Bei dem Computer 23 können sich Nutzer z.B. öffentliche Messgeräteschlüssel und/oder Programme zum Errechnen einer Vergleichssignatur beschaffen.

In dem Fahrzeug 6 ist neben einer mit einem Anschluss 24 verbundenen Batterie 26 eine Kommunikationseinheit 28 vorgesehen. Die Kommunikationseinheit 28 ermöglicht das Senden und Empfangen von Daten auf dem Verbindungskabel 4. Angeschlossen an die Kommunikationseinheit 28 ist eine Signatureinheit 30. Die Signatureinheit 30 kann von dem Fahrzeug 6 eine eindeutige Identifikation 32 erfassen.

Während des Ladevorgangs des Fahrzeugs 6 an der Ladestation 2 wird Energie von dem Energieversorgungsnetz 14 in die Batterie 26 des Fahrzeugs 6 gespeist. Die Menge der eingespeisten Energie wird mittels des Messgeräts 10 erfasst. Die Energiemenge, beispielsweise ein Zählerstand des Messgerätes 10, als auch andere Daten, wie beispielsweise die Identifikation der Ladestation 2 und/oder die Identifikation des Messgerätes 10, ein Zeitstempel, ein Zeit-Index, ein Status der Ladestation 2 und/oder ein Status des Messgerätes 10, ein Anfangszählerstand, ein Endzählerstand und/oder dergleichen kann über das Verbindungskabel 4 an das Fahrzeug 6 und/oder die Abrechnungszentrale 22 übermittelt werden.

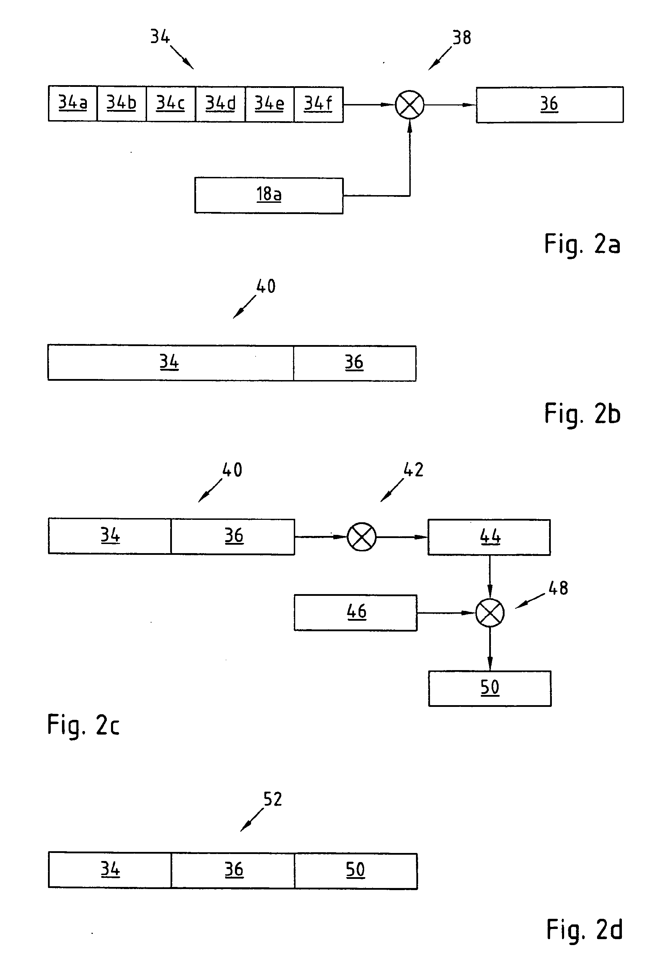

Hierzu übermittelt die Kommunikationseinheit 16 ein Datenpaket, wie es in den Figuren 2 erläutert ist. In dem Datenpaket können die genannten Messgrößen gespeichert werden. In dem Datenpaket kann auch ein öffentlicher Messgeräteschlüssel (PuM) 34e gespeichert werden. Auch können neben dem Datenpaket der öffentliche Messgeräteschlüssel (PuM) 34e und/oder Signaturen zwischen Ladestation 2 und Fahrzeug 6 und/oder Abrechnungszentrale 22 ausgetauscht werden.

Die Figuren 2 zeigen die Berechnung eines Datenpakets und einer Signatur, welche über das Verbindungskabel 4 zwischen Ladestation 2 und Fahrzeug 6 und/oder Abrechnungszentrale 22 ausgetauscht werden können.

Fig. 2a zeigt ein beispielhaftes erstes Datenpaket 34, in dem ein Zählerstand 34a, optional ein Messgerätestatus 34b, optional eine Messgeräteidentifikation 34c, optional eine Zeitinformation 34d, optional ein öffentlicher Messgeräteschlüssel (PuM) 34e und/oder eventuell weitere Daten 34f in einer binären Zahlenfolge abgespeichert sind. Die Messgeräte-Identifikation 34c kann ein eindeutiger Bezeichner des Messgerätes 10 und/oder der Ladestation 2 sein.

Für eine Authentifizierung des ersten Datenpakets 34 kann eine Signatur 36 erstellt werden. Hierzu wird in einem Rechenschnitt 38 das erste Datenpaket 34 zusammen mit einem privaten Messgeräteschlüssel (PiM) 18a verwendet, um eine erste Signatur (SD) 36 zu errechnen. So kann z.B. in dem Rechenschritt 38 ein Hash-Wert aus dem ersten Datenpaket bestimmt werden und dieser Hash-Wert kann mit dem privaten Messgeräteschlüssel (PiM) in die Signatur (SD) 36 umgerechnet werden.

Für die Übertragung des ersten Datenpakets 34 an das Fahrzeug 6 und/oder die Abrechnungszentrale 22 wird das erste Datenpaket 34 mit der Signatur 36 in einem Datensatz 40 verpackt. Der Datensatz 40 wird von der Ladestation 2 über das Verbindungskabel 4 an das Fahrzeug 6 oder über das Versorgungsnetz 14 oder das Datennetz 20 oder in sonstiger Weise an die Abrechnungszentrale 22 übermittelt. Fig. 2b zeigt den Datensatz 40 gebildet aus dem ersten Datenpaket 34 und der Signatur 36.

Der Datensatz 40 kann unmittelbar an die Abrechnungszentrale 22 gesendet werden. Die hieraus erhaltenen Daten können für eine Rechnungserstellung, wie nachfolgend noch beschrieben wird, verwendet werden. Der Nutzer kann die Rechnungsdaten unter Verwendung der Signatur 36 und seiner selbst getätigten Notizen auf Authentizität und Integrität überprüfen.

Um die Übertragung weiter zu sichern, ist es alternativ und/oder zusätzlich möglich, den Datensatz zunächst an das Fahrzeug 6 zu übermitteln.

In dem Fahrzeug 6 kann mittels der Kommunikationseinheit 28 der Datensatz 40 empfangen werden. In der Signatureinheit 30 kann der Datensatz 40 ausgewertet werden. Hierbei ist es möglich, dass mit Hilfe der ersten Signatur (SD) 36 die Authentizität des ersten Datenpakets 34 überprüft werden kann.

Hierzu ist es beispielsweise möglich, dass der öffentliche Messgeräteschlüssel (PuM) 34e in dem Fahrzeug 6 bekannt ist. Mit Hilfe dieser Information kann aus der ersten Signatur (SD) 36 in dem Fahrzeug 6 der Rechenschritt 38 umgekehrt werden und das Datenpaket 34 errechnet werden. Mit Hilfe des empfangenen Datenpakets 34 und dem errechneten Datenpaket kann ein Vergleich durchgeführt werden, der die Datenintegrität sicherstellt.

Nachdem in dem Fahrzeug 6 das erste Datenpaket 34 überprüft wurde, und eventuell seine Integrität festgestellt wurde, kann, wie in Fig. 2c dargestellt ist, in dem Fahrzeug 6 mittels der Signatureinheit 30 in einem zweiten Rechenschritt 42 zunächst ein Hash-Code 44 aus dem Datensatz 40 errechnet werden.

Mit Hilfe des Hash-Codes 44 und einem privaten Fahrzeugschlüssel 46 (Pi1) kann in einem Rechenschritt 48 eine zweite Signatur (SF1) 50 errechnet werden. Hierfür kann in Rechenschritt 48 beispielsweise ein ECC-Verschlüsselungsverfahren verwendet werden. Beispielsweise kann ein SHA-256 Algorithmus verwendet werden.

Die zweite Signatur (SF1) 50 kann beispielsweise das erste Datenpaket 34 zusammen mit der ersten Signatur 36 erneut signieren.

Wie in Fig. 2d dargestellt, kann die Signatureinheit 30 die zweite Signatur (SF1) 50 an das erste Datenpaket 34 und die erste Signatur (SD) 36 anhängen. Zusätzlich kann optional der öffentliche Fahrzeugschlüssel (Pu1) angehängt werden. Das so erstellte qualifizierte Datenpaket 52 kann von dem Fahrzeug 6 über das Verbindungskabel 4 an die Ladestation 2 übermittelt werden. Anschließend kann das qualifizierte Datenpaket 52 von der Ladestation 2 mittels der Kommunikationseinheit 16a über das Datennetz 20 an die Abrechnungszentrale 22 übermittelt werden. Parallel dazu kann beispielsweise die Ladestation das Datenpaket 34 zusätzlich an die Abrechnungszentrale 22 übermitteln.

Mit Hilfe des qualifizierte Datenpakets 52 ist es möglich, die Authentizität und Integrität des ersten Datenpakets 34 und des Datensatzes 40 zu überprüfen.

Zunächst kann in der Abrechnungszentrale 22 aus dem Datenpaket 34 und der ersten Signatur (SD) 36 entsprechend dem Rechenschritt 42 eine Vergleichssignatur errechnet werden. Aus der zweiten Signatur 50 kann in der Abrechnungszentrale 22 mit Hilfe des dort bekannten oder im qualifizierten Datenpaket 52 empfangenen öffentlichen Fahrzeugschlüssels (Pu2) der Hash-Code 44 mit dem Verfahren des Rechenschritts 48 errechnet werden. Ein Vergleich des in der Abrechnungszentrale errechneten Vergleichs Hash-Code mit dem in der Abrechnungszentrale aus der zweiten Signatur (SF1) errechneten Hash-Code ermöglicht die Überprüfung der Datenintegrität. Darüber hinaus kann durch eine Zertifizierung des jeweiligen Schlüsselpaares, hier des privaten Fahrzeugschlüssels (Pi2) und des öffentlichen Fahrzeugschlüssels (Pu2), überprüft werden, von wem die zweite Signatur (SF1) errechnet wurde.

Mit Hilfe des Hash-Codes und des Vergleichs Hash-Code kann überprüft werden, ob das qualifizierte Datenpaket 52 fehlerfrei in der Abrechnungszentrale 22 empfangen wurde.

Anschließend kann in der Abrechnungszentrale 22 mit Hilfe der ersten Signatur (SD) und dem in der Abrechnungszentrale 22 bekannten öffentlichen Messgeräteschlüssels (PuM) der Rechenschritt 38 umgekehrt und/oder erneut durchgeführt werden. Hierdurch kann überprüft werden, ob das Datenpaket 34 fehlerfrei von der Ladestation 2 an das Fahrzeug 6 und von dort zurück an die Abrechnungszentrale 22 übermittelt wurde.

Für einen Kunden ist mit Hilfe der ersten Signatur (SD) bzw. dem öffentlichen Messgeräteschlüssels (PuM) eine Überprüfung möglich, ob die in der Abrechnungszentrale 22 zu Abrechnungszwecken verwendeten Datenpakete 34 auch tatsächlich von den Ladestationen 2 stammen, an denen er Energie bezogen hat.

Hierzu kann der Nutzer z.N. von dem Computer 23 den öffentlichen Messgeräteschlüssels (PuM) der Ladestation, dessen ID er beim Ladevorgang notiert hat, herunterladen. Er kann die Ladestations-ID mit einer Ladestations-ID auf seiner Rechnung vergleichen. Die auf diese Ladestations-ID bezogenen Rechnungsdaten (Datenpakete) sind in der Rechnung jeweils mit einer Signatur versehen. Diese Signatur kann der Nutzer zusammen mit den von ihm notierten Zeitinformationen und dem geladenen öffentlichen Messgeräteschlüssels (PuM) der Ladestation überprüfen. Hierzu kann der Nutzer ein über den Computer 23 geladenes Programm nutzen.

Die Rechenschritte 38 und 48 können auf asymmetrischen Verschlüsselungsverfahren basieren, welche durch öffentliche und private Schlüssel die Erstellung, den Vergleich und die Validierung von Kryptogrammen ermöglichen.

Dies gewährleistet eine hohe Datenintegrität bei der Abrechnung. Auch ist eine Plausibilitätsüberprüfung möglich. Schließlich wird sichergestellt, dass das Datenpaket 34 sowohl unverfälscht in dem Fahrzeug 6 als auch unverfälscht in der Abrechnungszentrale 22 empfangen wurde.

Figur 2c zeigt die Signatur mit einem privaten Fahrzeugschlüssel (Pi2), welcher die Rückverfolgbarkeit eines Ladevorgangs zu einem bestimmten Fahrzeug erlaubt. Es kann jedoch erwünscht sein, dass gerade diese Rückverfolgbarkeit nicht möglich ist.

Um dies zu vermeiden, ist es möglich, dass zum Zeitpunkt eines Vertragsabschlusses ein öffentlicher Vertragsschlüssel (Pu3) und ein privater Vertragsschlüssel (Pi3) erstellt werden. Zumindest der öffentliche Vertragsschlüssel (Pu3) kann in einer Abrechnungszentrale 22 gespeichert werden.

Darüber hinaus kann von einem Fahrzeug 6 für einen Ladevorgang ein Tupel aus privatem Temporärschlüssel (Pi4) und öffentlichen Temporärschlüssel (Pu4) gebildet werden. Dieses Tupel kann pro Ladevorgang oder in regelmäßigen Abständen oder in unregelmäßigen Abständen erstellt werden.

Vor einer Signatur des Datensatzes 40 in dem Fahrzeug 6 kann der private Vertragsschlüssel (Pi3) von dem Fahrzeug 6 abgefragt werden. Dies kann beispielsweise durch Nutzereingabe erfolgen. Auch kann der private Vertragsschlüssel (Pi3) von einem Fahrzeugschlüssel (nicht gezeigt) elektrisch ausgelesen werden. Dies kann beispielsweise mittels eines Transponders erfolgen.

Mit Hilfe des privaten Vertragsschlüssels (Pi3) kann ein zuvor in dem Fahrzeug 6 erstellter öffentlicher Temporärschlüssel des Fahrzeugs (Pu4) signiert werden. Es entsteht die dritte Signatur (SK). Mit Hilfe des zuvor in dem Fahrzeug 6 erstellten privaten Temporärschlüssel des Fahrzeugs (Pi4) kann eine vierte Signatur (SF2) des Datensatz 40 aus Datenpaket 34 und erster Signatur (SD) 36, wie zuvor für die zweite Signatur (SF1) 50 in den Rechenschritten 42 und/oder 48 beschrieben, erzeugt werden.

Das qualifizierte Datenpaket 50 gebildet aus Datenpaket 34, erster Signatur (SD) 36, vierter Signatur (SF2) und dritter Signatur (SK) kann von dem Fahrzeug 6 über die Ladestation 2 an die Abrechnungszentrale 22 übermittelt werden.

In der Abrechnungszentrale 22 kann mittels des dort bekannten öffentlichen Vertragsschlüssels (Pu3) aus der dritten Signatur (SK) der private Temporärschlüssel (Pi4) zurückgerechnet werden. Mit dem so ermittelten privaten Temporärschlüssel (Pu4) kann die vierte Signatur (SF2) überprüft werden, entsprechend der Beschreibung der Überprüfung der zweiten Signatur (SF1) zuvor.

Hierbei kann in der Abrechnungszentrale eine Vergleichssignatur (SF2') mit Hilfe der empfangenen Daten und des privaten Temporärschlüssels (Pi4) errechnet werden. Diese Vergleichssignatur (SF2') kann mit der empfangenen vierten Signatur (SF2) verglichen werden. Stimmen beide Signaturen überein, so kann darauf geschlossen werden, dass die Daten unverfälscht empfangen wurden. Mit Hilfe der temporären Schlüssel und der Vertragsschlüssel ist eine Zuordnung zwischen Datensatz und Vertrag möglich, eine Rückverfolgbarkeit auf ein bestimmtes Fahrzeug ist aber nicht mehr möglich, da die Temporärschlüssel im Fahrzeug verändert werden und somit kein eindeutiger Temporärschlüssel einem Fahrzeug zuordenbar ist.

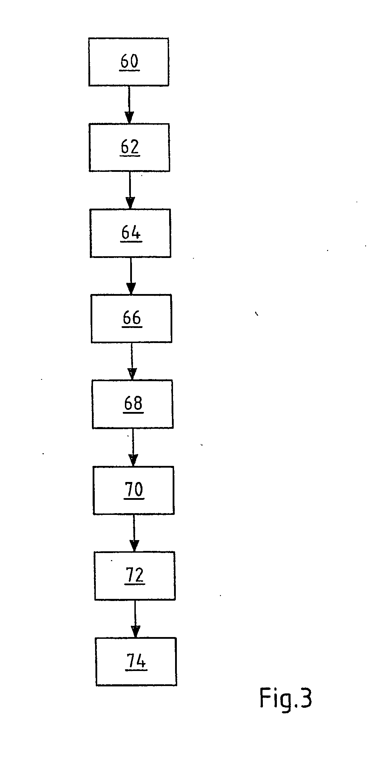

Figur 3 zeigt ein Ablaufdiagramm eines Verfahrens zur Überprüfung der Messdaten durch den Nutzer.

In einem ersten Schritt 60 begibt sich ein Nutzer mit seinem Fahrzeug 6 an eine Ladestation 2. Zu dem Zeitpunkt, zu dem das Ladekabel 4 in das Fahrzeug 6 gesteckt wurde, und der Ladevorgang beginnt, wird in der Ladestation 2, vorzugsweise im Messgerät 10 möglicherweise aber auch in der Recheneinheit 16 die aktuelle Uhrzeit oder ein Zeitindex sowie das Datum erfasst. Außerdem erfasst die Recheneinheit von dem Messgerät 10 den aktuellen Zählerstand. Darüber hinaus erfasst die Recheneinheit zumindest noch einen Status der Ladestation (z.B. in Ordnung / Fehler) und die Messgeräteidentifikation. Hierbei ist es möglich, dass Messwert, Zeit und Datum sowie Status und Signatur im Messgerät 10 erfasst werden. Auch ist es möglich, dass Teile davon in der Recheneinheit 16 erfasst und das Datenpaket in der Recheneinheit 16 signiert wird.

Parallel dazu kann der Nutzer ebenfalls die Uhrzeit und das Datum des Beginns des Ladevorgangs notieren. Hierzu nutzt er beispielsweise seine eigene Uhr. Auch kann der Nutzer die Messgeräteidentifikation oder eine Ladestations-ID, die bevorzugt außen an der Ladestation 2 angebracht ist, ablesen und notieren.

In einem zweiten Schritt 62 errechnet die Signatureinheit 16b aus dem Datenpaket 34, welches die oben genannten Informationen enthält, und dem Messgeräteschlüssel 18a die Signatur 36.

Das Datenpaket 34 und die Signatur 36 wird in einem nächsten Schritt 64 an die Abrechnungszentrale 22 übermittelt.

In einem nächsten Schritt 66 schließt der Nutzer den Ladevorgang ab. Zu diesem Zeitpunkt erfasst die Recheneinheit 16 erneut die aktuelle Uhrzeit oder ein Zeitindex sowie das Datum. Außerdem erfasst die Recheneinheit erneut von dem Messgerät 10 den aktuellen Zählerstand. Darüber hinaus erfasst die Recheneinheit erneut zumindest noch einen Status der Ladestation (z.B. in Ordnung / Fehler) und die Messgeräteidentifikation.

Parallel dazu kann der Nutzer ebenfalls erneut die Uhrzeit und das Datum des Endes des Ladevorgangs notieren. Hierzu nutzt er beispielsweise seine eigene Uhr.

In einem nächsten Schritt 68 errechnet die Signatureinheit 16b aus dem neuen Datenpaket 34, welches die oben genannten Informationen enthält, und dem Messgeräteschlüssel 18a die neue Signatur 36.

Das neue Datenpaket 34 und die neue Signatur 36 wird in einem nächsten Schritt 70 an die Abrechnungszentrale 22 übermittelt.

In der Abrechnungszentrale 22 werden aus den beiden empfangenen Datenpaketen die rechnungsrelevanten Informationen in Schritt 72 ermittelt.

Für einen Kunden bzw. eine Vertrags-ID werden über einen Rechnungszeitraum alle Ladevorgänge gesammelt.

Zum Zeitpunkt der Rechnungsstellung 74 erhält der Nutzer eine Rechnung. Diese Rechnung weist zum einen für jeden Tarif die gesamte bezogene Energiemenge und den Preis aus.

Außerdem weist die Rechnung für jeden Ladevorgang die Start- und Endzeit, das Datum, die Ladestations-ID, die Zählernummer, die Adresse der Ladestation 2, die Zählerstände zu Beginn und zum Ende des Ladevorgangs und die Energiemenge aus.

Darüber hinaus weist die Rechnung für jede Startzeit und jede Endzeit die Zählernummer, den Zählerstand, den

Messgerätestatus und die Signatur 36 aus. Diese Signatur 36 ist die in der Ladestation 2 berechnete Signatur. Diese Daten stehen auch abrufbar online dem Kunden zur Verfügung.

Ebenfalls abrufbar zur Verfügung stehen dem Kunden öffentliche Messgeräteschlüssel.

In einem Schritt 74 kann der Kunde mit den von ihm notierten Zeitinformationen und Messgeräteidentifikationen die ihm mitgeteilten Signaturen überprüfen. Hierzu kann er die notierten Informationen zusammen mit den mitgeteilten Informationen zum Zählerstand und Status verwenden, um mit dem öffentlichen Messgeräteschlüssel die Signatur zu prüfen. Hierzu kann er ein ebenfalls abrufbar bereitgestelltes Programm nutzen.

Mit Hilfe des gezeigten Verfahrens ist es möglich, Datenintegrität und Authentizität bei der Übertragung von Messdaten zwischen einer Ladestation und einem Fahrzeug und/oder einer Abrechnungszentrale sicherzustellen. Die Verwendung einer Signatur, welche mittels eines ECC-Verschlüsselungsverfahrens erstellt werden kann, und beispielsweise aus einem Hash-Code errechnet werden kann, ermöglicht es, die Authentizität und die Integrität der Messwerte in den Empfangseinrichtungen zu überprüfen. Die Berechnung der Signaturen kann mittels Public-Key-Verfahren erfolgen. Der Vorteil hiervon ist, dass die Datenpakete, die errechnet werden, aufgrund der Signatur nicht unnötig vergrößert werden. Die Länge der Datenpakete ist ein entscheidendes Kriterium für den Datenverkehr sowohl zwischen Ladestation 2 und Fahrzeug 6, als auch zwischen Ladestation 2 und Abrechnungszentrale 22. Die Signatur als auch eine mögliche Verschlüsselung dürfen die Datenpakete nicht zu groß werden lassen, da ansonsten das Datenvolumen zu groß wäre. Für den massenhaften Einsatz eignen sich somit Public-Key-Verfahren in besonderer Weise.

## Patentansprüche

1. Verfahren zur Sicherung einer Abrechnung einer von einer Ladestation bezogenen Energiemenge mit den Schritten:
zu Beginn eines Ladevorgangs:
- Empfangen eines ersten Datenpakets (34) umfassend zumindest einen ersten Messgerätezählerstand, eine erste Uhrzeit und eine Messgeräteidentifikation von einem die von einem Fahrzeug (6) von der Ladestation (3) bezogene Energiemenge messenden Messgerät (10) in einer zentralen Abrechnungsstation (22), und
- Empfangen einer mit Hilfe eines dem Messgerät (10) zugeordneten privaten Messgeräteschlüssels erstellten Signatur (36) des ersten Datenpaktes (34) in einer zentralen Abrechnungsstation (22),
zum Ende eines Ladevorgangs:
- Empfangen eines zweiten Datenpakets (34) umfassend zumindest einen zweiten Messgerätezählerstand, eine zweite Uhrzeit und die Messgeräteidentifikation von dem die von dem Fahrzeug (6) von der Ladestation (3) bezogene Energiemenge messenden Messgerät (10) in der zentralen Abrechnungsstation (22), und
- Empfangen einer mit Hilfe des dem Messgerät (10) zugeordneten privaten Messgeräteschlüssels erstellten Signatur (36) des zweiten Datenpaktes (34) in der zentralen Abrechnungsstation (22), und
- Bereitstellen von Abrechnungsdaten zu der bezogenen Energiemenge von der Abrechnungsstation (22) umfassend zumindest den ersten und zweiten Messgerätezählerstand, die jeweilige Uhrzeit, die Messgeräteidentifikation und die jeweilige ersten und zweite Signatur sowie einen dem Messgerät (10) zugeordneten öffentlichen Messgeräteschlüssel.

2. Verfahren nach Anspruch 1, **dadurch gekennzeichnet, dass** das Datenpaket (34) zumindest eine der Informationen aus
A) einem Messgerätestatus,
B) einer Kunden- und/oder Vertragsidentifikation,
C) Informationen über eine bezogene Energiemenge,
D) einem öffentlichen Messgeräteschlüssel (34e);
E) einem Zeit-Index;
enthält.

3. Verfahren nach einem der Ansprüche 1 bis 2, **dadurch gekennzeichnet, dass** die Signatur mit Hilfe zumindest eines Referenzwertes des zu signierenden Datensatzes erstellt wird.

4. Verfahren nach einem der Ansprüche 1 bis 3, **dadurch gekennzeichnet, dass** das Datenpaket (34) verschlüsselt wird.

5. Verfahren nach einem der Ansprüche 1 bis 4, **dadurch gekennzeichnet, dass** das Datenpaket (34) und die jeweilige Signatur (36) zu einem Zeitpunkt eines Tarifwechsels erstellt wird, wobei zu einem Zeitpunkt eines Tarifwechsels ein drittes Datenpaket (34) und die jeweilige Signatur (36) für ein Ende eines ersten Tarifs erstellt wird und dass ein viertes Datenpaket (34) und die jeweilige Signatur (36) für einen Beginn eines zweiten Tarifs erstellt wird oder aber nur ein Datenpaket(34) und eine Signatur(36) für den Zeitpunkt des Tarifwechsels.

6. Verfahren nach einem der Ansprüche 1 bis 5, **dadurch gekennzeichnet, dass** die Ladestation (2) aus dem Messgerätezählerstand zu Beginn eines Ladevorgangs und dem Messgerätezählstand zum Ende eines Ladevorgangs oder bei einem Tarifwechsel eine bezogene Energiemenge ermittelt und/oder die Abrechnungsstation (22) aus dem Messgerätezählerstand bei einem Tarifwechsel eine bezogene Energiemenge ermittelt.

7. Verfahren nach einem der Ansprüche 1 bis 6, **dadurch gekennzeichnet, dass** in den Abrechnungsdaten neben der bezogenen Energiemenge zumindest ein Wert aus:
A) einer Kunden und/oder Vertragsidentifikation,
B) Datumsinformationen,
C) einem Messgerätestatus, und/oder
D) einem öffentlicher Messgeräteschlüssel (PuM),
im Klartext ausgegeben wird.

8. Verfahren nach Anspruch 1 bis 7, **dadurch gekennzeichnet, dass** die Abrechnungsdaten auf der zentralen Abrechnungsstation (22) abrufbar bereitgehalten werden.

9. Verfahren nach Anspruch 8, **dadurch gekennzeichnet, dass** die Abrechnungsdaten zugriffsgeschützt bereitgehalten werden.

10. Verfahren nach einem der Ansprüche 1 bis 9, **dadurch gekennzeichnet, dass** die öffentlichen Messgeräteschlüssel von Messgeräten der Ladestationen durch einen von der Abrechnungsstation (22) logisch und/oder räumlich getrennten Computer (23) bereitgehalten werden.

11. Verfahren nach einem der Ansprüche 1.bis 10, **dadurch gekennzeichnet, dass** die Abrechnungsdaten und/oder die Messgeräteschlüssel über ein Weitverkehrsnetz (20), insbesondere das Internet, abrufbar sind

12. Verfahren nach einem der Ansprüche 1 bis 11, **dadurch gekennzeichnet, dass** über ein Weitverkehrsnetz (20) abrufbares Programm zur Errechnung der Signatur für den jeweils zugeordneten Messgerätezählerstand aus zumindest einem der Werte:
A) Kunden und/oder Vertragsidentifikation,
B) Zeitinformationen,
C) Datumsinformationen,
E) Messgeräteidentifikation,
F) Messgerätestatus, und/oder
G) öffentlicher Messgeräteschlüssel (PuM), bereitgestellt wird.

13. Vorrichtung zur Sicherung einer Abrechnung einer von einer Ladestation bezogenen Energiemenge mit
- einem Messgerät (10) eingerichtet zum Erfassen zumindest eines die von einem Fahrzeug (6) von der Ladestation (2) bezogenen Energiemenge repräsentierenden Messgerätezählerstands in der Ladestation (2),
- Rechenmitteln (16) eingerichtet zum Erstellen eines Datenpakets (34) umfassend zumindest den Messgerätezählerstand, und zum Erstellen einer Signatur (36) des Datenpaktes mit Hilfe eines Teils eines dem Messgerät (10) zugeordneten Messgeräteschlüssels,
- Sendemitteln eingerichtet
- zum Übermitteln eines ersten Datenpakets (34) umfassend zumindest einen ersten Messgerätezählerstand, eine erste Uhrzeit und eine Messgeräteidentifikation von einem die von einem Fahrzeug (6) von der Ladestation (3) bezogene Energiemenge messenden Messgerät (10) und
- einer mit Hilfe eines dem Messgerät (10) zugeordneten privaten Messgeräteschlüssels erstellten Signatur (36) des ersten Datenpaktes (34) zu Beginn eines Ladevorgangs und
- zum Übermitteln eines zweiten Datenpakets (34) umfassend zumindest einen zweiten Messgerätezählerstand, eine zweite Uhrzeit und die Messgeräteidentifikation von dem die von dem Fahrzeug (6) von der Ladestation (3) bezogene Energiemenge messenden Messgerät (10), und
- einer mit Hilfe des dem Messgerät (10) zugeordneten privaten Messgeräteschlüssels erstellten Signatur (36) des zweiten Datenpaktes (34) zum Ende eines Ladevorgangs.

## Claims

1. Method for securing accounting of an amount of energy drawn from a charging station comprising the steps of:
at the beginning of charging:
- receiving in a central accounting station (22) a first data packet (34) comprising at least a first meter count, a first time and a meter identification from a meter (10) measuring an energy quantity drawn by a vehicle (6) from the charging station (3), and
- receiving in a central accounting station (22) a signature (36) of the first data packet (34) created with the aid of a private meter key allocated to the meter (10),
at the end of charging:
- receiving a second data packet (34) comprising at least a second meter count, a second time, and a meter identification from the meter (10) measuring the energy quantity drawn by the vehicle (6) from the charging station (3),
- receiving in the central accounting station (22) a signature (36) of the second data packet (34) created with the aid of a private meter key allocated to the meter (10), and
- providing by the central accounting station accounting data regarding the amount of energy drawn comprising at least the first and second meter counts, respective times, the meter identification and the respective first and second signature as well as a public meter key the allocated to the meter (10)

2. The method according to claim 1, **characterized in that** the data packet (34) contains at least one of information from
A) a meter status,
B) a customer and / or contract identification,
C) information about a drawn amount of energy
D) a public meter key (34e);
E) a time index.

3. The method according to any one of claims 1 to 2, **characterized in that** the signature is created using at least one reference value of the data set to be signed.

4. The method according to any one of claims 1 to 3, **characterized in that** the data packet (34) is encrypted.

5. The method according to any one of claims 1 to 4, **characterized in that** the data packet (34) and the respective signature (36) are created at a moment of a tariff change, wherein at a moment of a tariff change a third data packet (34) and the respective signature (36) are created for an end of a first tariff and a fourth data packet (34) and the respective signature (36) are created for a start of a second tariff or only one data package (34) and one signature (36) are created for the moment of the tariff change.

6. The method according to any of claims 1 to 5, **characterized in that** the charging station (2) determines from the meter count at the beginning of the charging and the meter count at the end of the charging, or at the moment of a change of tariffs an amount of energy drawn and / or the accounting station (22) determined from the meter count at the moment of a tariff change an amount of energy drawn.

7. The method according to any one of claims 1 to 6, **characterized in that** in the accounting data in addition to the amount of energy drawn provides in plain text at least one value of:
A) a customer and / or contract identification,
B) date information,
C) a meter status, and / or
D) a public meter key (PUM).

8. The method of claim 1 to 7, **characterized in that** the accounting data is provided to be fetched in the central accounting station (22).

9. The method according to claim 8, **characterized in that** the accounting data is provided with restricted access.

10. The method according to any of claims 1 to 9, **characterized in that** the public meter keys of measuring instruments of the charging stations are provided by a computer (23) logically and / or spatially separated from the accounting station (22).

11. The method according to any of claims 1 to 10, **characterized in that** the accounting data and / or the meter keys are provided accessible over a wide area network (20), particularly the Internet.

12. The method according to any one of claims 1 to 11, **characterized in that** a program is provided fetchable over a wide area network (20) for calculating the signature for the respectively associated meter count from at least one of the values:
A) customer and / or contract identification,
B) time information,
C) date of information,
E) meters identification,
F) meter status, and / or
G) public meter key (PUM).

13. A device for securing accounting of an amount of energy drawn from a charging station comprising the steps of:
- a meter (10) in the charging station arranged for obtaining at least a first meter count representing an amount of energy drawn by a vehicle (6) from the charging station (3), and
- calculating means arranged for creating a data packet (34) comprising at least the meter count, and for creating a signature (36) of the data packet (34) with the aid of a part of private meter key allocated to the meter (10),
- sending means arranged for
- transmitting a first data packet (34) comprising at least a first meter count, a first time and a meter identification from a meter (10) measuring an energy quantity drawn by a vehicle (6) from the charging station (3), and a signature (36) of the first data packet (34) created with the aid of a private meter key allocated to the meter (10) at the beginning of the charging, and
- transmitting a second data packet (34) comprising at least a second meter count, a second time, and the meter identification from the meter (10) measuring the energy quantity drawn by the vehicle (6) from the charging station (3), and a signature (36) of the second data packet (34) created with the aid of a private meter key allocated to the meter (10) at the end of the charging.

## Revendications

1. Procédé de sécurisation d'une facturation d'une quantité d'énergie prélevée à une station de chargement, lequel procédé comprend les étapes suivantes :
Au début d'une opération de chargement :
- Réception, dans une station de facturation centrale (22), d'un premier paquet de données (34) qui comprend au moins un premier état de compteur d'un appareil de mesure, une première heure et une identification d'un appareil de mesure (10) qui mesure la quantité d'énergie prélevée à la station de chargement (3) par un véhicule automobile (6), et
- réception, dans la station de facturation centrale (22), d'une signature (36) du premier paquet de données (34), générée à l'aide d'une clé privée, associée à l'appareil de mesure (10),
A la fin d'une opération de chargement :
- Réception, dans la station de facturation centrale (22), d'un deuxième paquet de données (34) qui comprend au moins un deuxième état de compteur d'un appareil de mesure, une deuxième heure et l'identification de l'appareil de mesure (10) qui mesure la quantité d'énergie prélevée à la station de chargement (3) par le véhicule automobile (6), et
- réception, dans la station de facturation centrale (22), d'une signature (36) du deuxième paquet de données (34), générée à l'aide d'une clé privée, associée à l'appareil de mesure (10), et
- mise à disposition de données de facturation de la station de facturation centrale (22), relatives à la quantité d'énergie prélevée, comprenant au moins le premier état et le deuxième état du compteur de l'appareil de mesure, l'heure respective, l'identification de l'appareil de mesure et la première signature ainsi que la deuxième signature, et une clé publique, associée à l'appareil de mesure (10).

2. Procédé selon la revendication 1, **caractérisé en ce que** le paquet de données (34) contient au moins l'une des informations
A) d'un état de l'appareil de mesure,
B) d'une identification de client et / ou de contrat,
C) d'informations relatives à une quantité d'énergie prélevée,
D) d'une clé d'appareil de mesure publique (34e),
E) d'un index de temps.

3. Procédé selon l'une des revendications 1 à 2, **caractérisé en ce que** la signature est générée à l'aide d'au moins une valeur de référence du jeu de données à signer.

4. Procédé selon l'une des revendications 1 à 3, **caractérisé en ce que** le paquet de données (34) est codé.

5. Procédé selon l'une des revendications 1 à 4, **caractérisé en ce que** le paquet de données (34) et la signature (36) correspondante sont générés au moment d'un changement de tarif, sachant qu'au moment d'un changement de tarif, un troisième paquet de données (34) et la signature correspondante (36) sont générés pour la fin d'un premier tarif, et qu'un quatrième paquet de données (34) et la signature correspondante (36) sont générés pour le début d'un deuxième tarif, ou que seulement un paquet de données (34) et une signature (36) dont générés pour le moment du changement de tarif.

6. Procédé selon l'une des revendications 1 à 5, **caractérisé en ce que** la station de chargement (2) détermine, à partir de l'état du compteur de l'appareil de mesure, à la fin d'une opération de chargement ou lors d'un changement de tarif, une quantité d'énergie prélevée et / ou que la station de facturation (22) détermine, à partir de l'état du compteur de l'appareil de mesure, lors d'un changement de tarif, une quantité d'énergie prélevée.

7. Procédé selon l'une des revendications 1 à 6, **caractérisé en ce que,** dans les données de facturation, au moins une valeur
A) d'une identification de client et / ou de contrat,
B) d'informations sur la date,
C) d'un état de l'appareil de mesure, et / ou
D) d'une clé publique de l'appareil de mesure (PuM) est sortie en clair,

8. Procédé selon l'une des revendications 1 à 7, **caractérisé en ce que** les données de facturation sont tenues à disposition dans la station de facturation centrale (22).

9. Procédé selon la revendication 8, **caractérisé en ce que** les données de facturation sont tenues à disposition de manière sécurisée quant à l'accès.

10. Procédé selon l'une des revendications 1 à 9, **caractérisé en ce que** la clé publique d'appareils de mesure de stations de chargement sont tenues à disposition par un ordinateur (23) qui est séparé logiquement et / ou spatialement de la station de facturation centrale (22).

11. Procédé selon l'une des revendications 1 à 10, **caractérisé en ce que** les données de facturation et / ou les clés d'appareils de mesure peuvent être consultées par l'intermédiaire d'un réseau étendu (20), en particulier par internet.

12. Procédé selon l'une des revendications 1 à 11, **caractérisé en ce que**, par l'intermédiaire d'un réseau étendu (20), un programme de calcul est mis à disposition pour la détermination de la signature, pour chaque état du compteur de l'appareil de mesure associé, à partir de l'une au moins des valeurs :
A) identification de client et / ou de contrat,
B) informations relatives à l'heure.
C) informations relatives à la date,
E) identification de l'appareil de mesure,
F) état de l'appareil de mesure
et / ou
G) clé publique d'appareil de mesure (PuM).

13. Dispositif pour la sécurisation d'une facturation d'une quantité d'énergie prélevée à une station de chargement, avec
- un appareil de mesure (10) aménagé, dans la station de chargement (2), pour la saisie d'au moins un état du compteur d'un appareil de mesure représentant la quantité d'énergie prélevée par un véhicule automobile (6) dans la station de chargement (2),
- des moyens de calcul (16) aménagés pour la réalisation d'un paquet de données (34), comprenant au moins l'état du compteur de l'appareil de mesure, et pour la réalisation d'une signature (36) du paquet de données à l'aide d'une partie d'une clé associée à l'appareil de mesure (10),
- des moyens d'émission aménagés
- pour la transmission d'un premier paquet de données (34) qui comprend au moins un premier état du compteur de l'appareil de mesure, une premier heure et une identification d'un appareil de mesure (10) qui mesure la quantité d'énergie prélevée à la station de chargement (3) par un véhicule automobile (6), et
- d'une signature (36) du premier paquet de données (34) générée à l'aide d'une clé privée associée à l'appareil de mesure (10), au début d'une opération de chargement, et
- pour la transmission d'un deuxième paquet de données (34) qui comprend au moins un deuxième état du compteur de l'appareil de mesure, une deuxième heure et l'identification de l'appareil de mesure (10) qui mesure la quantité d'énergie prélevée à la station de chargement (3) par le véhicule automobile (6), et
- d'une signature (36) du deuxième paquet de données (34) générée à l'aide de la clé privée associée à l'appareil de mesure (10), à la fin d'une opération de chargement.
